# EUROPEAN PATENT SPECIFICATION

(11) **EP 3 338 415 B1**
(45) Date of publication and mention of the grant of the patent: **09.10.2019**
(21) Application number: 15750779.9
(22) Date of filing: 19.08.2015
(51) Int. Cl.: H04L 12/733, H04L 12/723, H04L 12/851, H04L 12/721

(54) **ROUTING COMMUNICATIONS TRAFFIC PACKETS ACROSS A COMMUNICATIONS NETWORK**
ROUTEN VON KOMMUNIKATIONSVERKEHRSPAKETEN ÜBER EIN KOMMUNIKATIONSNETZWERK
ROUTAGE DE PAQUETS DE TRAFIC DE COMMUNICATIONS DANS L'ENSEMBLE D'UN RÉSEAU DE COMMUNICATIONS

(43) Date of publication of application: 27.06.2018
(73) Proprietor: Telefonaktiebolaget LM Ericsson (PUBL), 164 83 Stockholm (SE)
(72) Inventor: FONDELLI, Francesco, 56100 Pisa (IT); DUTTI, Enrico, 56100 Pisa (IT); BOTTARI, Giulio, 56100 Pisa (IT); D'ERRICO, Antonio, 56100 Pisa (IT)
(74) Representative: Zacco Sweden AB
(86) International application number: PCT/EP2015/069035
(87) International publication number: WO 2017/028915

(56) References cited:
- US-A1- 2003 148 768
- US-A1- 2005 185 632
- US-A1- 2009 003 366
- FROST S BRYANT CISCO SYSTEMS D: "Packet Loss and Delay Measurement for MPLS Networks; draft-ietf-mpls-loss-delay-04.txt", PACKET LOSS AND DELAY MEASUREMENT FOR MPLS NETWORKS; DRAFT-IETF-MPLS-LOSS-DELAY-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 19 July 2011 (2011-07-19), pages 1-52, XP015077441, [retrieved on 2011-07-19]
- ALMES G ET AL: "A One-way Delay Metric for IPPM; draft-ietf-bmwg-ippm-delay-02.txt", A ONE-WAY DELAY METRIC FOR IPPM; DRAFT-IETF-BMWG-IPPM-DELAY-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. bmwg, no. 2, 1 July 1997 (1997-07-01) , XP015016129,

## Description

### Technical Field

The disclosure relates to a method of routing communications traffic packets across a communications network. The method further relates to a control system for a communications network and to a communications network comprising the control system.

### Background

The communications network has become a mission-critical component in many business areas. Networks are concrete extensions of business operations and must adapt to data intensive applications, known and unexpected security threats and new business needs. With trillions of dollars traded annually, financial service entities are investing heavily in optimizing electronic trading and employing direct market access to increase their speed to financial markets. In some specific applications, such as security transactions and markets, latency and packet loss in the communications network needs to be controlled and constrained above given thresholds. Current communications networks largely operate with internet protocol/multi-protocol labels switching, IP/MPLS, protocols but conventional strategies for path computation and traffic engineering are based on minimizing the administrative cost or the number of hops of a path. Manually configured performance measurements are distributed via traffic engineered extensions of interior gateway protocols, typically intermediate system to intermediate system, IS-IS, or open shortest path first, OSPF, so that any node in the communications network can make path selection decisions based on network performance. For example, the network specification proposed by Atlas, A. et al, "Performance-based Path Selection for Explicitly Routed LSPs using TE Metric Extensions", draft-atlas-mpls-te-express-path-04 (work in progress), September 2013, uses network performance data, such as is advertised via the OSPF and ISIS traffic engineering, TE, metric extensions to perform such path selections.

In a well-engineered and well-operated communications network, latency and packet loss should not vary significantly with traffic load. However, excess buffering of packets causes high latency and packet delay variation, as well as reducing the overall network throughput. When a router device is configured to use excessively large buffers, even very high-speed networks can become practically unusable for many time-sensitive applications. As a result, without taking into consideration dynamic queuing delay, path selection can be suboptimal or even unacceptable.

US 2005/185632 describes routing packets by nodes in an ad- hoc network in accordance with a link quality source routing protocol. Route discovery, route maintenance, and metric maintenance are designed to propagate and keep current link quality measurements. Metric maintenance includes a reactive approach for links that a node is currently using to route packets, and a proactive mechanism for all links.

US 2003/148768 describes a method and system for providing allocation of resources depending on the characteristics of the flow request. The system allocates resources based upon at least one of the parameters class of service, delay requirement and bandwidth requirement of the flow request.

### Summary

It is an object to provide an improved method of routing communications traffic packets across a communications network. It is a further object to provide an improved control system for a communications network. It is a further object to provide an improved communications network.

A first aspect of the disclosure provides a method of routing communications traffic packets across a communications network. The communications network comprising a plurality of nodes and a plurality of links interconnecting respective pairs of the nodes. The method comprises steps a. to c. Step a. comprises, for links of the network, obtaining a respective plurality of measurements of a parameter indicative of a quality of forwarding communications traffic packets across the link. Step b. comprises, for each link for which measurements of said parameter were obtained, calculating from the respective plurality of measurements of the parameter an index indicative of a percentage of the respective plurality of measurements of the parameter for which the parameter satisfies a preselected threshold value of the parameter. Step c. comprises selecting a path for communications traffic packets across the communications network by selecting links for the path based on the respective index of each said link.

The method may provide a routing operation that is aware of real network performances. By performing path selection based on effective network performances, instead of static pre-calculated figures, high value, time-sensitive communications traffic packets may be provided with the best quality path. The method may enable paths to be selected for mission critical communications traffic packets that require desired link forwarding quality to be assured.

In an embodiment, the parameter is indicative of one of communications traffic packets that are lost during use of the link and/or a length of time taken by communications traffic packets to use the link. High value, time-sensitive communications traffic packets may thus be provided with the best low packet loss and low packet delay paths.

In an embodiment, step a. comprises obtaining a plurality of respective current measurements of the or each parameter, and storing each said measurement that is obtained, and wherein in step b. the index for each said link is calculated from the respective stored measurements.

In an embodiment, the method additionally comprises establishing a respective 1-hop label switched path, LSP, in each direction for links of the network, and obtaining the measurements of the parameter for the 1-hop label switched paths. In some examples, step a. comprises periodically obtaining a current measurement of packet loss and/or a current measurement of packet latency for each 1-hop label switched path. The unidirectional 1-hop LSPs established in each direction on each link provide logical connectivity entities to which the packet loss and/or packet latency measurements are associated.

In an embodiment, the label switched paths have no reserved bandwidth. The function of the LSPs is not to carry communications traffic but to provide logical connectivity entities to which the packet loss and/or packet latency measurements are associated.

In an embodiment, the method additionally comprises, in response to a further node and links being added to the network, establishing a respective 1-hop label switched path, LSP, in each direction for each link connected to the further node. The addition of a new node to the network results in the setup of 1-hop LSPs among the nodes to which the new node is connected. The complexity of the method scales linearly with the number of links in the network.

In an embodiment, step a. comprises periodically making a current measurement of packet loss and/or packet latency for each 1-hop label switched path using Internet Engineering Task Force, IETF, RFC 6374. In an embodiment, step a. comprises periodically making a current measurement of packet loss and/or packet latency for each 1-hop label switched path using Internet Engineering Task Force, IETF, RFC 6375. The packet loss and/or packet latency measurements may be made using well accepted, standardised methods.

In an embodiment, the index calculated for at least one of said links is also indicative of at least one additional performance parameter of the link or a node which may affect the selection of a link for a path. In an embodiment, the at least one additional performance parameter is jitter.

In an embodiment, the index is a p-percentile. The index may be indicative of a percentage of time during which the parameter satisfies a preselected threshold value of the parameter.

In an embodiment, in step c. the path is selected by selecting links for the path based on the p-percentile of each said link. The method may enable p-percentile minimization to be applied as a routing criterion by dynamically acquiring performance data from network nodes.

In an embodiment, the communications network is a multi-protocol label switching, MPLS, based communications network. In an embodiment, the communications network is one of an internet protocol/multi-protocol label switching, IP/MPLS, based communications network and a multi-protocol label switching-transport profile, MPLS-TP, based communications network. In an embodiment, the communications network comprises a centralised control plane. In an embodiment, the communications network is a software defined networking, SDN, based communications network.

In an embodiment, the communications network is configured for traffic packets of a plurality of service classes. Steps a. to c. are performed for each service class on each said link. The method may enable high value, time-sensitive communications traffic packets of different service classes to be provided with the best quality path for each service class. As defined in IETF RFC 4594, section 1.3, a "service class" represents a set of traffic that requires specific delay, loss, and jitter characteristics from the network.

In an embodiment, in step a. a respective 1-hop label switched path is established for each service class on each said link.

In an embodiment, step a. is performed in response to a failure of a link, if there is a long recovery period associated with restoring the link.

In an embodiment, step c. comprises selecting a path for communications traffic packets across the communications network by selecting links for the path having a value of the index above a preselected value of the index.

In an embodiment, step a. is performed for each link of the network.

A second aspect of the disclosure provides a control system for a communications network. The communications network comprising a plurality of nodes and a plurality of links interconnecting respective pairs of the nodes. The control system is configured to, for links of the network, obtain a respective plurality of measurements of a parameter indicative of a quality of forwarding communications traffic packets across the link. The control system is configured to, for each said link, calculate from the respective plurality of measurements of the parameter an index indicative of a percentage of the respective plurality of measurements of the parameter for which the parameter satisfies a preselected threshold value of the parameter. The control system is configured to select a path for communications traffic packets across the communications network by selecting links for the path based on the respective index of each said link.

The control system may perform a routing operation that is aware of real network performances. By performing path selection based on effective network performances, instead of static pre-calculated figures, high value, time-sensitive the control system may provide communications traffic packets with the best quality path. The control system may enable paths to be selected for mission critical communications traffic packets that require desired link forwarding quality to be assured.

In an embodiment, the parameter is indicative of one of communications traffic packets that are lost during use of the link and/or a length of time taken by communications traffic packets to use the link. High value, time-sensitive communications traffic packets may thus be provided with the best low packet loss and low packet delay paths.

In an embodiment, the control system is configured to: obtain a plurality of respective current measurements of the or each parameter, and store each said measurement that is obtained; and calculate the index for each said link from the respective stored measurements.

In an embodiment, the controller is a network management system, NMS, controller. In an embodiment, the controller is a software defined networking, SDN, controller.

In an embodiment, the control system is configured to establish a respective 1-hop label switched path for each service class on each said link, and obtain the measurements of the parameter for the 1-hop label switched paths. In an embodiment, the control system is configured to select a path for communications traffic packets across the communications network by selecting links for the path having a value of the index above a preselected value of the index. In an embodiment, the control system is configured to obtain a said respective plurality of measurements of the parameter for each link of the network, and store each said measurement that is obtained; and calculate the index for each said link from the respective stored measurements.

In an embodiment, the index is a p-percentile. The index may be indicative of a percentage of time during which the parameter satisfies a preselected threshold value of the parameter.

In an embodiment, the communications network is a multi-protocol label switching, MPLS, based communications network. In an embodiment, the communications network is one of an internet protocol/multi-protocol label switching, IP/MPLS, based communications network and a multi-protocol label switching-transport profile, MPLS-TP, based communications network. In an embodiment, the communications network comprises a centralised control plane. In an embodiment, the communications network is a software defined networking, SDN, based communications network.

In an embodiment, the controller is a network management system, NMS, controller. In an embodiment, the controller is a software defined networking, SDN, controller.

In an embodiment, the communications network is configured for traffic packets of a plurality of service classes. The control system is configured to obtain the respective plurality of measurements of the parameter for each service class on each said link. The control system is configured to, for each service class on each said link, calculate from the respective plurality of measurements of the parameter an index indicative of a percentage of the respective plurality of measurements of the parameter for which the parameter satisfies a preselected threshold value of the parameter. The control system is configured to select a path for communications traffic packets having a respective one of the service classes by selecting links for the path based on the respective index of each said link for the respective service class. The control system may enable high value, time-sensitive communications traffic packets of different service classes to be provided with the best quality path for each service class. As defined in IETF RFC 4594, section 1.3, a "service class" represents a set of traffic that requires specific delay, loss, and jitter characteristics from the network.

In an embodiment, the control system is configured to establish a respective 1-hop label switched path for each service class on each said link.

In an embodiment, the control system is configured to obtain said respective plurality of measurements of the parameter in response to a failure of a link, if there is a long recovery period associated with restoring the link.

In an embodiment, the control system is configured to select a path for communications traffic packets across the communications network by selecting links for the path having a value of the index above a preselected value of the index.

In an embodiment, the control system is configured to obtain a said respective plurality of measurements of the parameter for each link of the network.

A fourth aspect of the disclosure provides a computer program, comprising instructions which, when executed on at least one processor, cause the at least one processor to carry out any of the above steps of the method of routing communications traffic packets across a communications network.

A fifth aspect of the disclosure provides a carrier containing a computer program, comprising instructions which, when executed on at least one processor, cause the at least one processor to carry out any of the above steps of the method of routing communications traffic packets across a communications network. The carrier is one of an electronic signal, optical signal, radio signal, or computer readable storage medium.

### Brief Description of the drawings

Embodiments of the disclosure will now be described, by way of example only, with reference to the accompanying drawings.
Figure 1 shows the steps of a method according to a first embodiment of the disclosure of routing communications traffic packets across a communications network;
Figure 2 shows the steps of a method according to a further embodiment of the disclosure of routing communications traffic packets across a communications network;
Figure 3 shows the steps of a method according to a further embodiment of the disclosure of routing communications traffic packets across a communications network;
Figure 4 illustrates a communications network in which a method according to a further embodiment of the disclosure of routing communications traffic packets is implemented;
Figure 5 illustrates the communications network of Figure 4 following the addition of a further node;
Figure 6 is a schematic illustration of a control system according to a further embodiment of the disclosure for a communications network;
Figure 7 is a schematic illustration of the controller of the control system of Figure 4; and
Figure 8 is a schematic illustration of a communications network according to a further embodiment of the disclosure.

### Detailed description

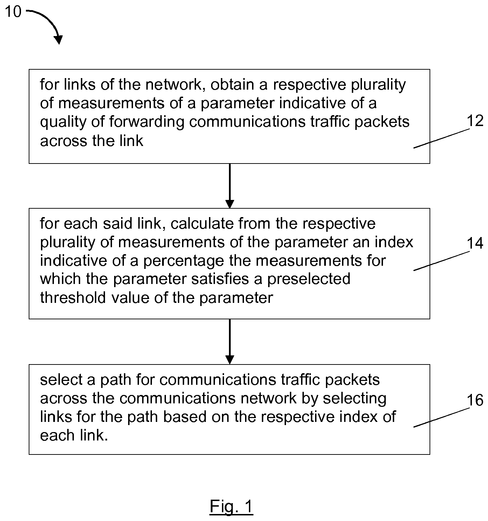

Referring to Figure 1, a first embodiment of the disclosure provides a method 10 of routing communications traffic packets across a communications network. The communications network comprises a plurality of nodes and a plurality of links interconnecting respective pairs of the nodes.

The method comprises steps 12,14,16, also referred to as steps a. to c. In step 12, for links of the network, a respective plurality of measurements of a parameter are obtained. The parameter is indicative of a quality of forwarding communications traffic packets across the link. In step 14, for each link for which a respective plurality of measurements of the parameter were obtained, an index is calculated from the respective plurality of measurements of the parameter that is indicative of a percentage of the respective plurality of measurements of the parameter for which the parameter satisfies a preselected threshold value of the parameter. In step 16, a path across the communications network is selected for communications traffic packets by selecting links for the path based on the respective index of each link.

In a further embodiment, the parameter may be indicative of a percentage of communications traffic packets that are lost during use of the link and/or the parameter may be indicative of a length of time taken by communications traffic packets to use the link. The length of time taken by a packet to use a link is also known as "packet delay" and comprises any delay that the packet experiences at the node before transmission across the link, also known as "packet latency", and the length of time it takes for the packet to be transmitted across the link. The same reference numbers will used for corresponding features in different embodiments.

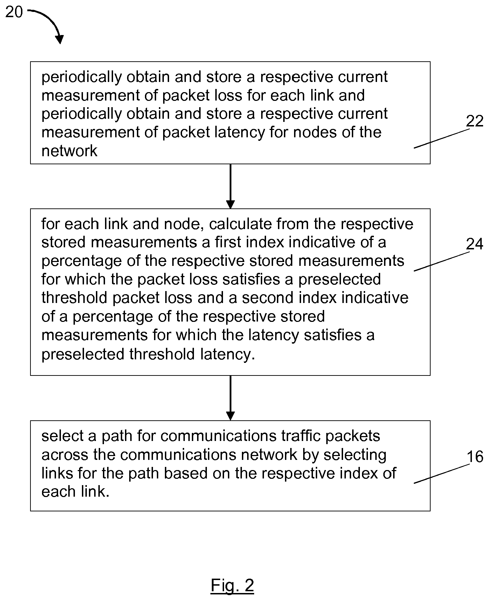

Referring to Figure 2, a further embodiment of the disclosure provides a method 20 of routing communications traffic packets across a communications network. The method 20 of this embodiment is similar to the method 10 of the first embodiment, with the following modifications.

In this embodiment, in step 22, a respective current measurement of packet loss is obtained for the links of the network and/or a respective current measurement of packet latency is obtained for nodes of the network. Each measurement that is obtained is then stored. In step 24, the index for each link for which a plurality of measurements was obtained is calculated from the stored measurements for that link. The method 20 further comprises 16, as described above.

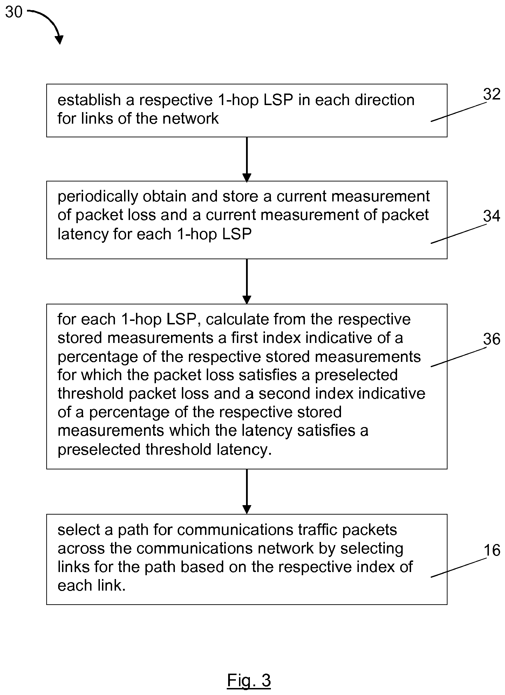

Referring to Figure 3, a further embodiment of the disclosure provides a method 30 of routing communications traffic packets across a communications network. The method 30 of this embodiment is similar to the method 20 of the previous embodiment, with the following modifications.

The method 30 additionally comprises establishing in step 32 a respective 1-hop label switched path, LSP, in each direction for links of the network. Each 1-hop LSP is unidirectional in its respective link direction. The function of each 1-hop LSP is to provide the logical connectivity entity to which the performance measurements, i.e. packet loss and/or packet latency, are associated.

Step 34 comprises periodically obtaining and storing a current measurement of the or each parameter, e.g. periodically obtaining and storing a current measurement of packet loss and/or periodically obtaining and storing a current measurement of packet latency for each 1-hop LSP.

In step 36, for each 1-hop LSP, a first index is calculated from the respective stored measurements; the first index is indicative of a percentage of the respective stored measurements for which the packet loss satisfies a preselected threshold packet loss. For each 1-hop LSP a second index, indicative of a percentage of the respective stored measurements which the latency satisfies a preselected threshold latency, is also calculated. The threshold for each parameter is separate.

In a further embodiment, the 1-hop LSPs have no reserved bandwidth; their function is not to carry communications traffic but to provide the logical connectivity entity to which the performance measurements, i.e. packet loss and/or packet latency, are associated.

In a further embodiment, the index calculated for at least one of the links is also indicative of at least one additional performance parameter of the link or a node which may affect the selection of a link for a path. The additional performance parameter may, for example, be jitter. In some examples, the parameter of packet loss is measured for said links and/or the parameter of packet latency is measured for nodes of the network

The method 30 further comprises 16, as described above.

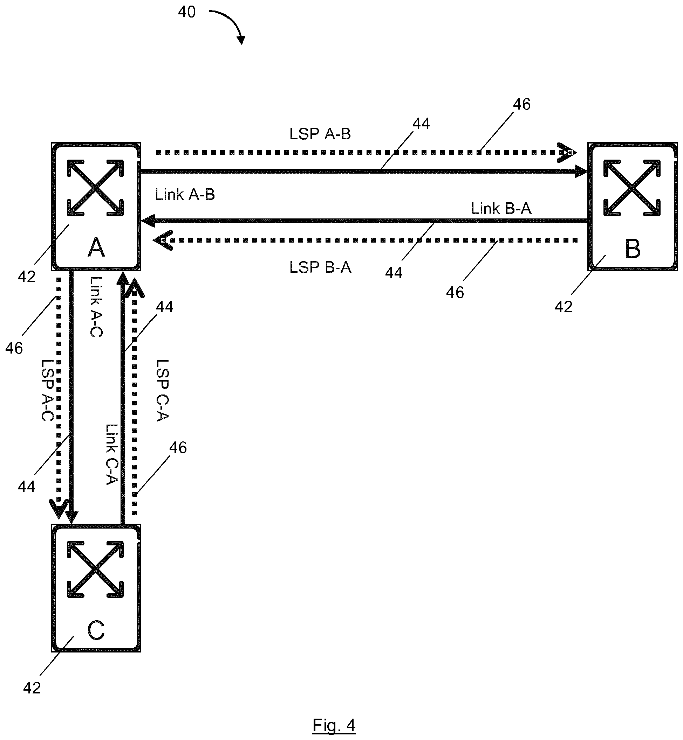

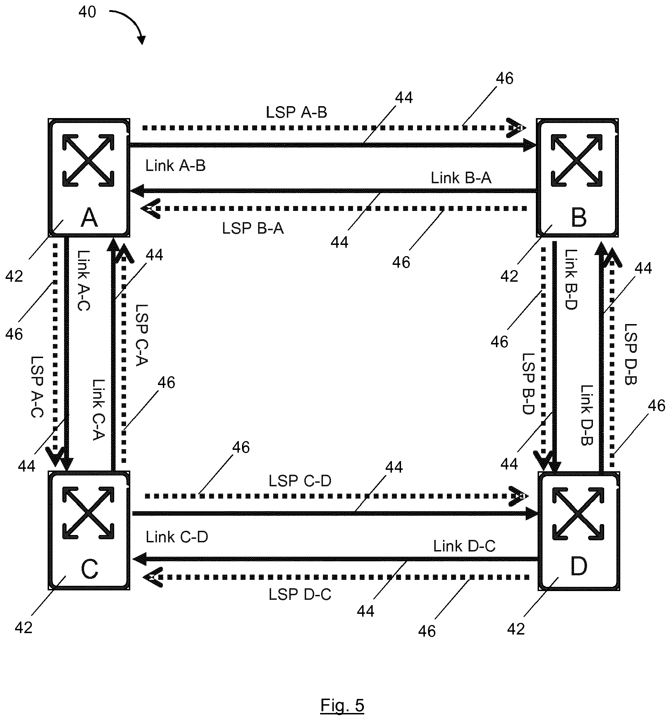

Referring to Figures 4 and 5, a further embodiment of the disclosure provides a method of routing communications traffic packets across a communications network 40. The communications network comprises a plurality of nodes 42 and a plurality of links 44 interconnecting respective pairs of the nodes.

The network 40 comprises three nodes, A, B and C, and two links each of which are operable in each direction. The links are identified in each direction as: link A-B; link B-A; link A-C; and link C-A. For each link, in each direction, a uni-directional LSP 46 is established: LSP A-B; LSP B-A; LSP A-C; and LSP C-A.

The communications traffic packets are each of one of a plurality of service classes and each link may transport packets of each service class. As defined in IETF RFC 4594, section 1.3, a "service class" represents a set of traffic that requires specific delay, loss, and/or jitter characteristics from the network.

The main aim of the method is to offer the best low-latency, low-packet-loss paths across the network 40 for high value, time-sensitive communications traffic packets based on effective network performances. The method has three general stages:
- Periodic measurement of one or more parameter indicative of quality, e.g. the current latencies and/or packet losses of the links 44 and nodes 42 and storage of these measurements in a centralized database.
- Statistical elaboration or processing of the collected measurements to compute specific indexes.
- Path computation using the computed indexes to route mission critical traffic.

In an embodiment, at least one of the links of the communications network is a radio link. In some examples, the index calculated for the radio link is indicative of a likelihood of a radio signal being weather affected during transmission across the link.

In more detail, the method of this embodiment comprises the following steps:
1. For each link and each service class, a unidirectional 1-hop LSP with no reserved bandwidth is established. The scope of these LSPs is not to carry communications traffic but to provide the logical connectivity entity to which the performance measurements, in this embodiment packet loss and latency, are associated.
2. For each 1-hop LSP, a latency and packet loss measurement is made according to RFC 6374 (IP/MPLS) or RFC 6375 (MPLS-TP). The measurements are repeated on a periodic schedule or may be triggered by specific events (e.g. link failures).
3. The measurements of packet loss and latency are stored in a measurements repository, which is periodically updated as new measurements are made.
5. The measurements are periodically retrieved from the measurements repository.
6. The retrieved measurements are processed to calculate p-percentile indexes of latency and packet loss for each link and for each service class. The p-percentile indexes express the percentage of time during which a given parameter satisfies a given threshold. For example, the 95^{th} percentile referred to packet loss says that for 95% of the time the packet loss satisfies (i.e. is below) a given level or threshold. Similarly, the p-percentile index applied to latency refers to the p% of time the latency satisfies (i.e. is below) a predetermined latency threshold. The p-percentile calculations are made on stored measurements and not directly on measurements coming from the network. This ensures that the resulting p-percentile indexes are obtained from a stable set of measurements.
7. The p-percentile indexes are then used to determine the end-to-end paths for communications traffic packets with particular latency and/or packet loss requirements (i.e. "mission critical" traffic).

Planned and un-planned events can affect the network. For example, referring to Figure 5, a fourth node 42, node D, may be connected to the network 40. New links 44 are used to connect node D with nodes B and C. As node D is activated, new 1-hop LSPs 46 are established in each direction on the new links, to include the new node in operation of the method.

If a node is detached from the network, traffic "pressure" increases on other nodes. Therefore, if this occurs it is advisable to perform a full refresh of the packet loss and latency measurements as soon as possible. However, failures only trigger a measurements refresh if the recovery takes a relatively long time, and thus the loss of communications traffic is quite high. If the recovery of the link is almost immediate, the packet loss and latency values around the network 40 will only be slightly affected. Such a small "burst" failure can generally absorbed by the p-percentile range of the packet loss and latency, provided that the p parameter is high enough (e.g. 95%).

Mission critical communications traffic require assured performances in the underlying packet network. Operators demand end to end paths with low latency (or low packet loss) and guaranteed bandwidth. Latency and packet loss are metrics to be minimized while bandwidth is a constraint to be guaranteed. The method uses p-percentile minimization as a routing criterion by dynamically acquiring performance data, i.e. packet loss and latency, from network nodes 42.

The method may provide a routing operation that is aware of real performances of links and nodes of the network. Performing path selection based on effective network performances, instead of static pre-calculated figures, may enable high value, time-sensitive communications traffic packets to be provided with the best low-latency low-packet-loss path available. Calculating the respective index for each link from stored measurements may ensure that a stable data set is used for the calculation. The method may therefore be able to tolerate link failures that are of short duration, with link recovery being almost immediate. In such a scenario, the packet loss and packet latency values around the network are only slightly affected and a small "burst" change in these values may be absorbed into the plurality of measurements, and thus may be absorbed by the respective index of the link that failed.

In any of the above described embodiments, the communications network may be a multi-protocol label switching, MPLS, based communications network. The communications network may be an internet protocol/multi-protocol label switching, IP/MPLS, based communications network or a multi-protocol label switching-transport profile, MPLS-TP, based communications network. The communications network may comprise a centralised control plane or the communications network may be a software defined networking, SDN, based communications network.

The method may use conventional performance parameters like latency (i.e. packet delay) and packet loss. Commercial packet nodes are able to export these parameters. However, the method may also use other performance parameters by simply adjusting the criteria used to derive indexes from performance data. As a consequence, future packet nodes could be used in the network with a simple upgrade at the central location (i.e. NMS or SDN controller).

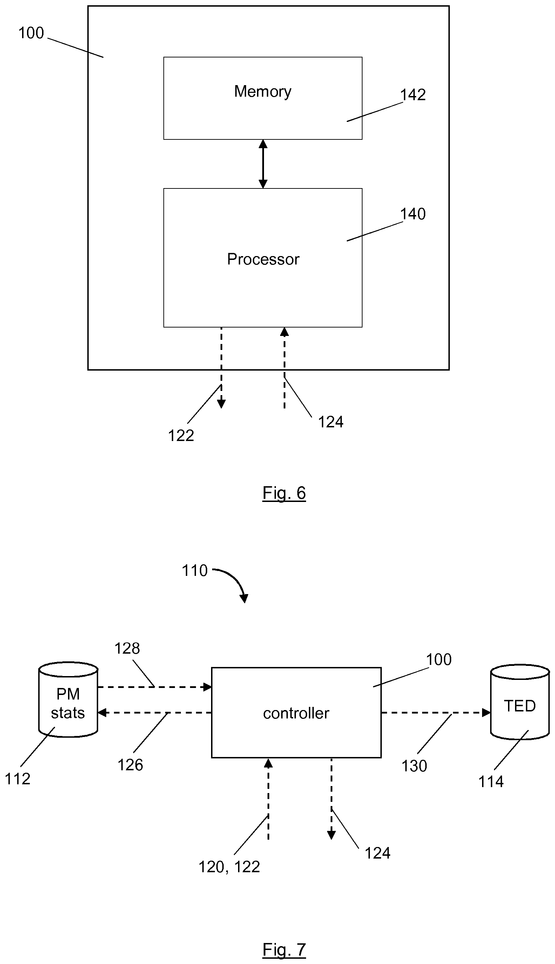

Referring to Figure 6, a further embodiment of the disclosure provides a control system 100 for a communications network. The communications network comprising a plurality of nodes and a plurality of links interconnecting respective pairs of the nodes.

The control system comprises a controller 100 configured to, for links of the network, obtain a respective plurality of measurements 124 of a parameter indicative of a quality of forwarding communications traffic packets across the link (e.g. packet loss or latency, delay). For each said link, calculate from the respective plurality of measurements of the parameter an index indicative of a percentage of the respective plurality of measurements of the parameter for which the parameter satisfies a preselected threshold value of the parameter. The control system is further configured to select a path for communications traffic packets across the communications network by selecting links for the path based on the respective index of each said link.

The control system may perform a routing operation that is aware of real network performances. By performing path selection based on effective network performances, instead of static pre-calculated figures, high value, time-sensitive the control system may provide communications traffic packets with the best quality path. The control system may enable paths to be selected for mission critical communications traffic packets that require desired link forwarding quality to be assured. Calculating the respective index for each link from stored measurements may ensure that a stable data set is used for the calculation. The control system may therefore be able to tolerate link failures that are of short duration, with link recovery being almost immediate. In such a scenario, the packet loss and packet latency values around the network are only slightly affected and a small "burst" change in these values may be absorbed into the plurality of measurements, and thus may be absorbed by the respective index of the link that failed.

In an embodiment, the communications network is configured for traffic packets of a plurality of service classes. The control system is configured to obtain the respective plurality of measurements of the parameter for each service class on each said link. The control system is configured to, for each service class on each said link, calculate from the respective plurality of measurements of the parameter an index indicative of a percentage of the respective plurality of measurements of the parameter for which the parameter satisfies a preselected threshold value of the parameter. The control system is configured to select a path for communications traffic packets having a respective one of the service classes by selecting links for the path based on the respective index of each said link for the respective service class. The control system may enable high value, time-sensitive communications traffic packets of different service classes to be provided with the best quality path for each service class. As defined in IETF RFC 4594, section 1.3, a "service class" represents a set of traffic that requires specific delay, loss, and jitter characteristics from the network.

In an embodiment, the control system is configured to obtain said respective plurality of measurements of the parameter in response to a failure of a link, if there is a long recovery period associated with restoring the link.

The controller may be implemented as one or more processors, hardware, processing hardware or circuitry. The controller 100 may for example comprise a processor 140 and a memory 142.

References to processors, hardware, processing hardware or circuitry can encompass any kind of logic or analog circuitry, integrated to any degree, and not limited to general purpose processors, digital signal processors, ASICs, FPGAs, discrete components or logic and so on. References to a processor are intended to encompass implementations using multiple processors which may be integrated together, or co-located in the same node or distributed at different locations for example.

In a further embodiment, the parameter may be indicative of a percentage of communications traffic packets that are lost during use of the link (i.e. packet loss) and/or the parameter may be indicative of a length of time taken by communications traffic packets to use the link. The parameter may correspond to any measure of packet loss, latency, or other parameter indicating quality, e.g. jitter. The length of time taken by a packet to use a link is also known as "packet delay" and comprises any delay that the packet experiences at the node before transmission across the link, also known as "packet latency", and the length of time it takes for the packet to be transmitted across the link.

In a further embodiment, the controller 100 is configured to obtain a respective current measurement of packet loss for the links of the network. The controller may alternatively, or additionally, be configured to obtain a respective current measurement of packet latency for nodes of the network. The controller is configured to store each measurement that is obtained. The controller is configured to calculate the index for each link for which a plurality of measurements was obtained from the stored measurements for that lin b
k.

Referring the Figure 7, a further embodiment of the disclosure provides a control system 110 for a communications network that is similar to the control system of the previous embodiment, with the following modifications.

In this embodiment, the control system 110 comprises a controller 110, as described in the previous embodiment, a parameter measurements repository, PM stats, 112 and a traffic engineering database, TED, 114.

The measurements repository 112 is configured to receive the measurements 126 of the parameter from the controller and to store the measurements of the parameter. The controller is configured to, for each link for which measurements were obtained, retrieve the respective plurality of measurements 128 of the parameter from the measurements repository and to calculate from the retrieved measurements of the parameter an index indicative of a percentage of the respective plurality of measurements of the parameter for which the parameter satisfies a preselected threshold value of the parameter. For example, the index indicative of a percentage of the respective plurality of measurements of the parameter for which the parameter satisfies a preselected threshold value of the parameter is, or is derived from, the p-percentile index described in any example. For example, the index may be, or may be based on, a percentage of time which the parameter (e.g. latency, packet loss) satisfies a threshold. The threshold may be considered as satisfied if the parameter indicates a service quality which is better than indicated by the threshold service quality, e.g. a lower latency than a latency threshold and/or a lower packet loss than a packet loss threshold.

The TED 114 is configured to receive and to store the respective index 130 for each link.

The controller 110 comprises a path computation engine, PCE, configured to select a path for communications traffic packets across the communications network by selecting links for the path based on the respective index of each link stored in the TED. The TED is thus populated with indexes which may be used by the PCE to determine an end-to-end path for communications traffic with particular parameter requirements, e.g. latency and/or packet loss requirements (i.e. "mission critical" traffic). For example, the PCE selects a path comprising links which have a parameter index which satisfies a threshold, e.g. packet loss index (e.g.-p-percentile) is above 95%. In some examples, the PCE selects a path comprising links having the optimal one or more index parameters, e.g. selecting the path with the highest (indicating the best) parameter index(es) from the possible paths.

In an embodiment, the control system comprises a controller, a parameter measurements repository and a traffic engineering database, TED. The controller is configured to, for said links, obtain said respective plurality of measurements of the parameter. The parameter measurements repository is configured to receive said measurements of the parameter from the controller and to store said measurements of the parameter. The controller is configured to, for each said link, retrieve said respective plurality of measurements of the parameter from the parameter measurement repository and to calculate from the retrieved measurements of the parameter an index indicative of a percentage of the respective plurality of measurements of the parameter for which the parameter satisfies a preselected threshold value of the parameter.

The controller is configured to control transferring the index calculated on the stored measurements to the traffic engineering database.

The traffic engineering database is configured to receive and to store the respective index for each said link. The controller comprises a path computation engine configured to select a path for communications traffic packets across the communications network by selecting links for the path based on the respective index of each said link stored in the traffic engineering database. The TED is thus populated with indexes which may be used by the path computation engine to determine an end-to-end path for communications traffic with particular latency and/or packet loss requirements (i.e. "mission critical" traffic). Thus, the indexes are used for path selection.

The controller may be implemented as one or more processors, hardware, processing hardware or circuitry. References to processors, hardware, processing hardware or circuitry can encompass any kind of logic or analog circuitry, integrated to any degree, and not limited to general purpose processors, digital signal processors, ASICs, FPGAs, discrete components or logic and so on. References to a processor are intended to encompass implementations using multiple processors which may be integrated together, or co-located in the same node or distributed at different locations for example.

In a further embodiment, the control system 110 is configured to establish a respective 1-hop LSP in each direction for each of the links of the network. The unidirectional 1-hop LSPs established in each direction on each link provide logical connectivity entities to which the packet loss and/or packet latency measurements are associated.

The control system is configured to periodically obtain and store a current measurement of packet loss and/or periodically obtain and store a current measurement of latency for each 1-hop LSP.

The control system is configured to, for each 1-hop LSP, calculate a respective first index from the respective stored measurements; the first index is indicative of a percentage of the respective stored measurements for which the packet loss satisfies a preselected threshold packet loss. The control system is configured to, for each 1-hop LSP, calculate a respective second index, indicative of a percentage of the respective stored measurements which the latency satisfies a preselected threshold latency.

In a further embodiment, the 1-hop LSPs have no reserved bandwidth; their function is not to carry communications traffic but to provide the logical connectivity entity to which the performance measurements, i.e. packet loss and/or packet latency, are associated.

In a further embodiment, the index calculated for at least one of the links is also indicative of at least one additional performance parameter of the link or a node which may affect the selection of a link for a path. The additional performance parameter may, for example, be jitter.

For any of the above described control systems, the communications network may be a multi-protocol label switching, MPLS, based communications network. The communications network may be an internet protocol/multi-protocol label switching, IP/MPLS, based communications network or a multi-protocol label switching-transport profile, MPLS-TP, based communications network. The communications network may comprise a centralised control plane or the communications network may be a software defined networking, SDN, based communications network.

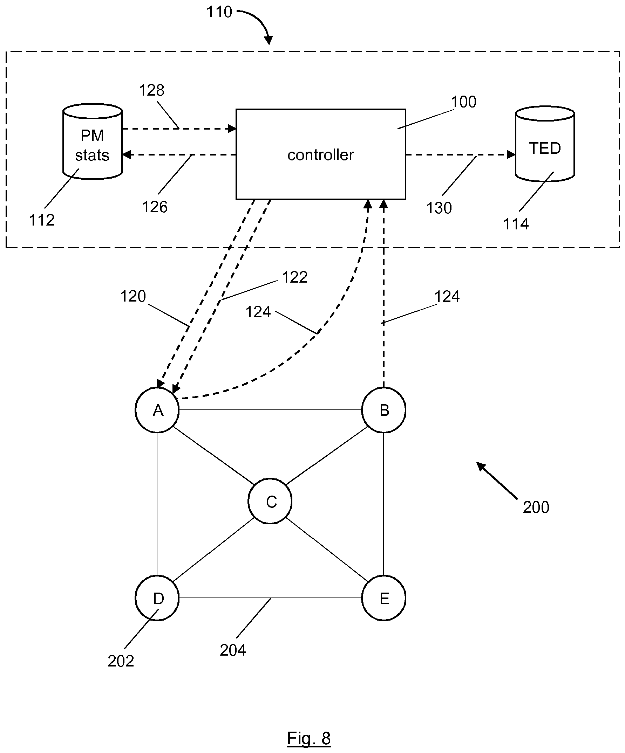

Referring to Figure 8, in a further embodiment the control system 110 is configured to offer the best low-latency, low-packet-loss paths across a communications network 200 for high value, time-sensitive communications traffic packets based on effective network performances. The control system is configured generally to perform the following:
- Periodic measurement of the current latencies and packet losses of the links 204 and 202 of the network and storage of these measurements in a centralized database 112.
- Statistical elaboration of the collected measurements to compute specific indexes.
- Path computation using the computed indexes to route mission critical traffic.

In more detail, the control system 110 is configured to:
1. For each link and each service class, establish a unidirectional 1-hop LSP with no reserved bandwidth 120. The scope of these LSPs is not to carry communications traffic but to provide the logical connectivity entity to which the performance measurements, in this embodiment packet loss and latency, are associated.
2. For each 1-hop LSP, make a current latency and a current packet loss measurement 1222, 124 according to RFC 6374 (IP/MPLS) or RFC 6375 (MPLS-TP). The control system is configured to repeat the measurements on a periodic schedule and to have measurements triggered by specific events (e.g. link failures).
3. The control system is configured to store the measurements of packet loss and latency the measurements 126 repository 112, which is periodically updated as new measurements are made.
5. The controller 100 is configured to periodically retrieve the measurements 128 from the measurements repository.
6. The controller 100 is configured to process the retrieved measurements to calculate p-percentile indexes of latency and packet loss for each link and for each service class. The p-percentile indexes express the percentage of time during which a given parameter satisfies a given threshold. For example, the 95th percentile referred to packet loss says that for 95% of the time the packet loss satisfies a given level. It is important to note that the p-percentile calculations are made on stored measurements and not directly on measurements coming from the network. This ensures that the resulting p-percentile indexes are obtained from a stable set of measurements.
7. The control system is configured to store the p-percentile indexes 130, for each of the links, in the TED 114.
8. The controller 100 comprises a PCE configured to use the p-percentile indexes to select end-to-end paths for communications traffic packets with particular latency and/or packet loss requirements (i.e. "mission critical" traffic).

The control system may use conventional performance parameters like latency (i.e. packet delay) and packet loss. Commercial packet nodes are able to export these parameters. However, the control system may also use other performance parameters by simply adjusting the criteria used to derive indexes from performance data. As a consequence, future packet nodes could be used in the network with a simple upgrade at the central location (i.e. NMS or SDN controller).

In an embodiment, the control system is configured to establish a respective 1-hop label switched path in each direction for links of the network. The control system periodically obtaining said respective current measurement of packet loss and/or periodically obtaining said respective current measurement of latency comprises periodically obtaining a current measurement of packet loss and/or periodically obtaining a current measurement of latency for each 1-hop label switched path. The unidirectional 1-hop LSPs established in each direction on each link provide logical connectivity entities to which the packet loss and/or packet latency measurements are associated.

In an embodiment, the label switched paths have no reserved bandwidth. The function of the LSPs is not to carry communications traffic but to provide logical connectivity entities to which the packet loss and/or packet latency measurements are associated.

In an embodiment, the control system is configured, in response to a further node and links being added to the network, to establish a respective 1-hop label switched path, LSP, in each direction for each link connected to the further node. The addition of a new node to the network results in the setup of 1-hop LSPs among the nodes to which the new node is connected.

In an embodiment, the control system is configured to cause a current measurement of packet loss and/or packet latency to be periodically made for each 1-hop label switched path using Internet Engineering Task Force, IETF, RFC 6374. In an embodiment, the control system is configured to cause a current measurement of packet loss and/or packet latency for each 1-hop label switched path to be made using Internet Engineering Task Force, IETF, RFC 6375. The packet loss and/or packet latency measurements may therefore be made using well accepted, standardised methods.

In an embodiment, the index calculated for at least one of the links is also indicative of at least one additional performance parameter of the link or a node which may affect the selection of a link for a path. In an embodiment, the at least one additional performance parameter is jitter.

In an embodiment, the index is a p-percentile. The index may therefore be indicative of a percentage of time during which the parameter satisfies a preselected threshold value of the parameter.

In an embodiment, in step c. the path is selected by selecting links for the path based on the p-percentile of each said link. The control system may enable p-percentile minimization to be applied as a routing criterion by dynamically acquiring performance data from network nodes.

In an embodiment, the communications network is a multi-protocol label switching, MPLS, based communications network. In an embodiment, the communications network is one of an internet protocol/multi-protocol label switching, IP/MPLS, based communications network and a multi-protocol label switching-transport profile, MPLS-TP, based communications network. In an embodiment, the communications network comprises a centralised control plane. In an embodiment, the communications network is a software defined networking, SDN, based communications network.

A further embodiment of the disclosure provides a communications network 200, as shown in Figure 8. The communications network 200 comprises five nodes 202, a plurality of links 204 interconnecting respective pairs of the nodes and a control system 110, as described in the previous embodiment.

A further embodiment of the disclosure provides a computer program, comprising instructions which, when executed on at least one processor, cause the at least one processor to carry out any of the steps of the method of routing communications traffic packets across a communications network as described in the above embodiments.

A further embodiment of the disclosure provides a carrier containing a computer program, comprising instructions which, when executed on at least one processor, cause the at least one processor to carry out any of the above steps of the method of routing communications traffic packets across a communications network as described in the above embodiments.

In an embodiment, the carrier is one of an electronic signal, optical signal, radio signal, or computer readable storage medium.

A further aspect of the disclosure provides a communications network comprising a plurality of nodes, a plurality of links interconnecting respective pairs of the nodes and a control system. The control system is configured to, for links of the network, obtain a respective plurality of measurements of a parameter indicative of a quality of forwarding communications traffic packets across the link. The control system is configured to, for each said link, calculate from the respective plurality of measurements of the parameter an index indicative of a percentage of the respective plurality of measurements of the parameter for which the parameter satisfies a preselected threshold value of the parameter. The control system is configured to select a path for communications traffic packets across the communications network by selecting links for the path based on the respective index of each said link. The control system, links and/or nodes or other network elements may be as described in any example.

## Claims

1. A method (10) of routing communications traffic packets across a communications network comprising a plurality of nodes and a plurality of links (44) interconnecting respective pairs of the nodes, the method being **characterized by** comprising steps:
a. for each link of the network and each service class, establishing a respective 1-hop label switched path in each direction for each of the links (44) of the network, and obtaining (12) a respective plurality of current measurements of at least one parameter, indicative of a quality of forwarding communications traffic packets across the link, for each 1-hop label switched path;
b. for each 1-hop label switched path, storing each said measurement of the respective plurality of current measurements of the at least one parameter that is obtained;
c. for each 1-hop label switched path, calculating (14) p-percentile indexes from the respective stored plurality of current measurements of the at least one parameter, the p-percentile indexes indicative of a percentage of time during which the at least one parameter satisfies a preselected threshold value of the at least one parameter; and
d. selecting (16) a path for communications traffic packets across the communications network by selecting links for the path based on the respective p-percentile indexes of each said link.

2. A method as claimed in claim 1, wherein the at least one parameter is indicative of one of communications traffic packets that are lost during use of the link (44), and/or, a length of time taken by communications traffic packets to use the link.

3. A method as claimed in claim 1 or claim 2, wherein step a. comprises obtaining the plurality of respective current measurements of the at least one parameter in response to a failure of one of the links (44) due to a long recovery period associated with restoration of the one of the links (44).

4. A method as claimed in any one of the preceding claims, comprising transferring the p-percentile indexes calculated on the stored measurements to a traffic engineering database (114), wherein the traffic engineering database is configured to receive and to store the respective p-percentile indexes for each said link.

5. A method as claimed in any one of the preceding claims, wherein each 1-hop label switched path is unidirectional in its respective link direction, and wherein a function of each 1-hop label switched path is to provide a logical connectivity entity to which the respective plurality of current measurements are associated.

6. A method as claimed in claim 5, wherein the 1-hop label switched paths have no reserved bandwidth.

7. A method as claimed in any preceding claims, wherein the communications network is a multi-protocol label switching, MPLS, based communications network.

8. A control system (110) for a communications network comprising a plurality of nodes (42) and a plurality of links interconnecting respective pairs of the nodes, the control system being **characterized by** being configured to:
for each link (44) of the network and each service class, establish a respective 1-hop label switched path in each direction for each of the links (44) of the network, and obtain (12) a respective plurality of current measurements of at least one parameter, indicative of a quality of forwarding communications traffic packets across the link, for each 1-hop label switched path;
for each 1-hop label switched path, store each said measurement of the respective plurality of current measurements of the at least one parameter that is obtained;
for each 1-hop label switched path, calculate (14) p-percentile indexes from the respective stored plurality of current measurements of the at least one parameter, the p-percentile indexes indicative of a percentage of time during which the at least one parameter satisfies a preselected threshold value of the at least one parameter; and
select (16) a path for communications traffic packets across the communications network by selecting links for the path based on the respective p-percentile indexes of each said link.

9. A control system as claimed in claim 8, wherein the at least one parameter is indicative of one of communications traffic packets that are lost during use of the link (44), and/or, a length of time taken by communications traffic packets to use the link.

10. A control system as claimed in claim 8 or claim 9, configured to:
obtain the plurality of respective current measurements of the at least one parameter in response to a failure of one of the links (44) due to a long recovery period associated with restoration of the one of the links (44).

11. A control system as claimed in claim 10, wherein each 1-hop label switched path is unidirectional in its respective link direction, and wherein a function of each 1-hop label switched path is to provide a logical connectivity entity to which the respective plurality of current measurements are associated.

12. A control system as claimed in claim 11, wherein the label switched paths have no reserved bandwidth.

13. A control system as claimed in any preceding claim, wherein the communications network is a multi-protocol label switching, MPLS, based communications network.

14. A communications network comprising:
a plurality of nodes;
a plurality of links (44) interconnecting respective pairs of the nodes; and
a control system (110) as claimed in any of claims 8 to 12.

15. A computer program, comprising instructions which, when executed on at least one processor, cause the at least one processor to carry out the method according to any one of claims 1 to 7.

## Patentansprüche

1. Verfahren (10) zum Routen von Kommunikationsverkehrspaketen über ein Kommunikationsnetz, das eine Vielzahl von Knoten und eine Vielzahl von Verbindungen (44) umfasst, die jeweilige Paare der Knoten miteinander verbinden, wobei das Verfahren **gekennzeichnet ist dadurch, dass es**
Schritte umfasst:
a. für jede Verbindung des Netzwerks und jede Dienstklasse, Einrichten eines jeweiligen 1-Hop-Label-Switched-Pfades in jeder Richtung für jede der Verbindungen (44) des Netzwerks, und Erhalten (12) einer entsprechenden Vielzahl von aktuellen Messungen von mindestens einem Parameter, der eine Qualität der Weiterleitung von Kommunikationsverkehrspaketen über die Verbindung, für jeden 1-Hop-Label-Switched-Pfad, angibt;
b. für jeden 1-Hop-Label-Switched-Pfad, Speichern jeder Messung der jeweiligen Vielzahl von aktuellen Messungen des mindestens einen erhaltenen Parameters;
c. für jeden 1-Hop-Label-Switched-Pfad, Berechnen (14) von p-Perzentilindizes aus der jeweiligen gespeicherten Vielzahl von aktuellen Messungen des mindestens einen Parameters, wobei die p-Perzentilindizes einen Prozentsatz der Zeit angeben, während der der mindestens eine Parameter einen vorgewählten Schwellenwert des mindestens einen Parameters erfüllt; und
d. Auswählen (16) eines Pfades für Kommunikationsverkehrspakete über das Kommunikationsnetz durch Auswählen von Verbindungen für den Pfad basierend auf den jeweiligen p-Perzentilindizes jeder Verbindung.

2. Verfahren nach Anspruch 1, wobei der mindestens eine Parameter eines der Kommunikationsverkehrspakete anzeigt, die während der Nutzung der Verbindung (44) verloren gehen, und/oder eine Zeitspanne, die Kommunikationsverkehrspakete zur Nutzung der Verbindung benötigen.

3. Verfahren nach Anspruch 1 oder Anspruch 2, wobei Schritt a. das Erhalten der Vielzahl von jeweiligen aktuellen Messungen des mindestens einen Parameters als Reaktion auf einen Ausfall einer der Verbindungen (44) aufgrund einer langen Erholungsperiode, die der Wiederherstellung der einen der Verbindungen (44) zugeordnet ist, umfasst.

4. Verfahren nach einem der vorstehenden Ansprüche, umfassend das Übertragen der auf den gespeicherten Messungen berechneten p-Perzentilindizes in eine Verkehrstechnik-Datenbank (114), wobei die Verkehrstechnik-Datenbank dazu konfiguriert ist, die jeweiligen p-Perzentilindizes für jede der Verbindungen zu empfangen und zu speichern.

5. Verfahren nach einem der vorstehenden Ansprüche, wobei jeder 1-Hop-Label-Switched-Pfad in seiner jeweiligen Verbindungsrichtung unidirektional ist, und wobei eine Funktion jedes 1-Hop-Label-Switched-Pfades darin besteht, eine logische Verbindungseinheit bereitzustellen, der die jeweilige Vielzahl von aktuellen Messungen zugeordnet ist.

6. Verfahren nach Anspruch 5, wobei die 1-Hop-Label-Switched-Pfade keine reservierte Bandbreite aufweisen.

7. Verfahren nach einem der vorstehenden Ansprüche, wobei das Kommunikationsnetz ein Multiprotokoll-Label-Switching-basiertes Kommunikationsnetz, MPLS-basiertes Kommunikationsnetz, ist.

8. Steuersystem (110) für ein Kommunikationsnetz, umfassend eine Vielzahl von Knoten (42) und eine Vielzahl von Verbindungen, die jeweilige Paare der Knoten miteinander verbinden, wobei das Steuersystem **dadurch gekennzeichnet ist, dass** es zu konfiguriert ist zum:
Einrichten eines jeweiligen 1-Hop-Label-Switched-Pfads in jeder Richtung für jede der Verbindungen (44) des Netzwerks für jede Verbindung (44) des Netzwerks und jede Dienstklasse, und Erhalten (12) einer entsprechenden Vielzahl von aktuellen Messungen von mindestens einem Parameter, die eine Qualität der Weiterleitung von Kommunikationsverkehrspaketen über die Verbindung anzeigen, für jeden 1-Hop-Label-Switched-Pfad;
Speichern jeder der Messungen der jeweiligen Vielzahl von aktuellen Messungen des mindestens einen erhaltenen Parameters für jeden 1-Hop-Label-Switched-Pfad;
Berechnen (14) der p-Perzentilindizes aus der jeweiligen gespeicherten Vielzahl von aktuellen Messungen des mindestens einen Parameters für jeden 1-Hop-Label-Switched-Pfad, wobei die p-Perzentilindizes einen Prozentsatz der Zeit angeben, während der der mindestens eine Parameter einen vorgewählten Schwellenwert des mindestens einen Parameters erfüllt; und Auswählen (16) eines Pfads für Kommunikationsverkehrspakete über das Kommunikationsnetz durch Auswählen von Verbindungen für den Pfad basierend auf den jeweiligen p-Perzentilindizes jeder Verbindung.

9. Steuersystem nach Anspruch 8, wobei der mindestens eine Parameter eines der Kommunikationsverkehrspakete anzeigt, die während der Nutzung der Verbindung (44) verloren gehen, und/oder eine Zeitspanne, die Kommunikationsverkehrspakete zur Nutzung der Verbindung benötigen.

10. Steuersystem nach Anspruch 8 oder 9, das konfiguriert ist zum:
Erhalten der Vielzahl von jeweiligen aktuellen Messungen des mindestens einen Parameters als Reaktion auf einen Ausfall einer der Verbindungen (44) aufgrund einer langen Erholungsperiode, die der Wiederherstellung der einen der Verbindungen (44) zugeordnet ist.

11. Steuersystem nach Anspruch 10, wobei jeder 1-Hop-Label-Switched-Pfad in seiner jeweiligen Verbindungsrichtung unidirektional ist, und wobei eine Funktion jedes 1-Hop-Label-Switched-Pfades darin besteht, eine logische Verbindungseinheit bereitzustellen, der die jeweilige Vielzahl von aktuellen Messungen zugeordnet ist.

12. Steuersystem nach Anspruch 11, wobei die Label-geschalteten Pfade keine reservierte Bandbreite aufweisen.

13. Steuersystem nach einem der vorstehenden Ansprüche, wobei das Kommunikationsnetz ein auf Multiprotokoll-Label-Switching-basiertes Kommunikationsnetz, MPLS-basiertes Kommunikationsnetz, ist.

14. Kommunikationsnetz, umfassend:
eine Vielzahl von Knoten;
eine Vielzahl von Verbindungen (44), die jeweilige Paare der Knoten miteinander verbinden; und
ein Steuersystem (110) nach einem der Ansprüche 8 bis 12.

15. Computerprogramm, umfassend Anweisungen, die bei Ausführung auf mindestens einem Prozessor bewirken, dass der mindestens eine Prozessor das Verfahren nach einem der Ansprüche 1 bis 7 ausführt.

## Revendications

1. Procédé (10) de routage de paquets de trafic de communications à travers un réseau de communications comprenant une pluralité de noeuds et une pluralité de liaisons (44) interconnectant des paires respectives des noeuds, le procédé étant **caractérisé en ce**
**qu'**il comprend les étapes :
a. pour chaque liaison du réseau et chaque classe de service, l'établissement d'un chemin à commutation d'étiquettes à 1 saut respectif dans chaque direction pour chacune des liaisons (44) du réseau, et l'obtention (12) d'une pluralité respective de mesures actuelles d'au moins un paramètre, indicatives d'une qualité d'acheminement de paquets de trafic de communications à travers la liaison, pour chaque chemin à commutation d'étiquettes à 1 saut ;
b. pour chaque chemin à commutation d'étiquettes à 1 saut, le stockage de chaque mesure précitée de la pluralité respective de mesures actuelles de l'au moins un paramètre qui est obtenue ;
c. pour chaque chemin à commutation d'étiquettes à 1 saut, le calcul (14) d'indices de centile p à partir de la pluralité stockée respective de mesures actuelles de l'au moins un paramètre, les indices de centile p indiquant un pourcentage de temps pendant lequel l'au moins un paramètre répond à une valeur seuil présélectionnée de l'au moins un paramètre ; et
d. la sélection (16) d'un chemin pour des paquets de trafic de communications à travers le réseau de communications en sélectionnant des liaisons pour le chemin sur la base des indices de centile p respectifs de chaque liaison précitée.

2. Procédé selon la revendication 1, dans lequel l'au moins un paramètre est indicatif de l'un parmi des paquets de trafic de communications qui sont perdus pendant l'utilisation de la liaison (44), et/ou, d'une durée occupée par des paquets de trafic de communications pour utiliser la liaison.

3. Procédé selon la revendication 1 ou la revendication 2, dans lequel l'étape a. comprend l'obtention de la pluralité de mesures actuelles respectives de l'au moins un paramètre en réponse à une défaillance de l'une des liaisons (44) du fait d'une longue période de récupération associée à la restauration de cette liaison (44).

4. Procédé selon l'une quelconque des revendications précédentes, comprenant le transfert des indices de centile p calculés sur les mesures stockées vers une base de données d'ingénierie de trafic (114), dans lequel la base de données d'ingénierie de trafic est configurée pour recevoir et pour stocker les indices de centile p respectifs pour chaque liaison précitée.

5. Procédé selon l'une quelconque des revendications précédentes, dans lequel chaque chemin à commutation d'étiquettes à 1 saut est unidirectionnel dans sa direction de liaison respective, et dans lequel une fonction de chaque chemin à commutation d'étiquettes à 1 saut consiste à fournir une entité logique de connectivité à laquelle la pluralité respective de mesures actuelles sont associées.

6. Procédé selon la revendication 5, dans lequel les chemins à commutation d'étiquettes à 1 saut n'ont aucune largeur de bande réservée.

7. Procédé selon l'une quelconque des revendications précédentes, dans lequel le réseau de communications est un réseau de communications basé sur une commutation d'étiquette multi-protocole, MPLS.

8. Système de commande (110) pour un réseau de communications comprenant une pluralité de noeuds (42) et une pluralité de liaisons interconnectant des paires respectives des noeuds, le système de commande étant **caractérisé en ce qu'**il est configuré pour :
pour chaque liaison (44) du réseau et chaque classe de service, établir un chemin à commutation d'étiquettes à 1 saut respectif dans chaque direction pour chacune des liaisons (44) du réseau, et obtenir (12) une pluralité respective de mesures actuelles d'au moins un paramètre,
indicatives d'une qualité d'acheminement de paquets de trafic de communications à travers la liaison, pour chaque chemin à commutation d'étiquettes à 1 saut ;
pour chaque chemin à commutation d'étiquettes à 1 saut, stocker chaque mesure précitée de la pluralité respective de mesures actuelles de l'au moins un paramètre qui est obtenue ;
pour chaque chemin à commutation d'étiquettes à 1 saut, calculer (14) des indices de centile p à partir de la pluralité stockée respective de mesures actuelles de l'au moins un paramètre, les indices de centile p indiquant un pourcentage de temps pendant lequel l'au moins un paramètre répond à une valeur seuil présélectionnée de l'au moins un paramètre ; et
sélectionner (16) un chemin pour des paquets de trafic de communications à travers le réseau de communications en sélectionnant des liaisons pour le chemin sur la base des indices de centile p respectifs de chaque liaison précitée.

9. Système de commande selon la revendication 8, dans lequel l'au moins un paramètre est indicatif de l'un parmi des paquets de trafic de communications qui sont perdus pendant l'utilisation de la liaison (44), et/ou, d'une durée occupée par des paquets de trafic de communications pour utiliser la liaison.

10. Système de commande selon la revendication 8 ou la revendication 9, configuré pour :
obtenir la pluralité de mesures actuelles respectives de l'au moins un paramètre en réponse à une défaillance d'une des liaisons (44) du fait d'une longue période de récupération associée à la restauration de cette liaison (44).

11. Système de commande selon la revendication 10, dans lequel chaque chemin à commutation d'étiquettes à 1 saut est unidirectionnel dans sa direction de liaison respective, et dans lequel une fonction de chaque chemin à commutation d'étiquettes à 1 saut consiste à fournir une entité logique de connectivité à laquelle la pluralité respective de mesures actuelles sont associées.

12. Système de commande selon la revendication 11, dans lequel les chemins à commutation d'étiquettes n'ont aucune largeur de bande réservée.

13. Système de commande selon l'une quelconque des revendications précédentes, dans lequel le réseau de communications est un réseau de communications basé sur une commutation d'étiquette multi-protocole, MPLS.

14. Réseau de communications comprenant :
une pluralité de noeuds ;
une pluralité de liaisons (44) interconnectant des paires respectives des noeuds ; et
un système de commande (110) selon l'une quelconque des revendications 8 à 12.

15. Programme d'ordinateur, comprenant des instructions qui, lorsqu'elles sont exécutées sur au moins un processeur, amènent l'au moins un processeur à effectuer le procédé selon l'une quelconque des revendications 1 à 7.
